# FASCICULE DE BREVET EUROPEEN

(11) **EP 3 096 545 B1**
(45) Date de publication et mention de la délivrance du brevet: **17.12.2025**
(21) Numéro de dépôt: 16170369.9
(22) Date de dépôt: 19.05.2016
(51) Int. Cl.: H04W 12/08, H04W 12/10, H04W 4/80, G06Q 20/22, G06Q 20/32, G06Q 20/38, G06Q 20/20, G06Q 20/04, H04W 12/71, H04W 12/77

(54) **PROCÉDÉ DE RÉALISATION D'UNE TRANSACTION ENTRE UN APPAREIL ET UN TÉLÉPHONE MOBILE**
VERFAHREN ZUR DURCHFÜHRUNG EINER TRANSAKTION ZWISCHEN EINEM GERÄT UND EINEM MOBILTELEFON
METHOD FOR CARRYING OUT A TRANSACTION BETWEEN AN APPARATUS AND A MOBILE PHONE

(30) Priorité: 19.05.2015 FR 1554483
(43) Date de publication de la demande: 23.11.2016
(73) Titulaire: Flowbird, 92200 Neuilly-sur-Seine (FR)
(72) Inventeur: MOTTET, François, 25870 Les Auxons (FR); PEQUIGNOT, Gabriel, 37000 Tours (FR)
(74) Mandataire: Lavoix

(56) Documents cités:
- WO-A1-2010/065896
- WO-A1-2015/036755
- WO-A1-2015/059389
- US-A1- 2009 282 256

## Description

La présente invention concerne un procédé de réalisation d'une transaction entre un téléphone mobile et un appareil de vente. L'invention concerne également un procédé de contrôle d'une preuve d'achat générée lors d'une telle vente. L'invention concerne, en outre, un procédé d'achat d'un produit à un appareil de vente par un téléphone mobile. L'invention se rapporte également aux produits programmes d'ordinateurs associés aux procédés ci-dessus. L'invention concerne aussi un appareil de vente.

Un téléphone mobile est fréquemment doté d'une unité de traitement d'informations apte à mettre en œuvre des fonctions différentes de la seule communication téléphonique. Par exemple, l'unité de traitement d'informations est propre à exécuter des jeux électroniques, ou à mémoriser des fichiers vidéo.

Il est, en particulier, connu d'utiliser l'unité de traitement d'informations d'un téléphone mobile pour mémoriser une preuve d'achat d'un titre de transport. Par exemple, le titre de transport est acheté à un serveur centralisé par le réseau Internet, puis transmis au téléphone mobile à travers le réseau de téléphonie mobile auquel appartient le téléphone mobile. Pour permettre l'authentification du titre de transport, la preuve d'achat est affichée sur l'écran du téléphone sous forme, par exemple, d'un code matriciel.

Chacun des documents WO 2010/065896 A1, WO2015/059389 A1 décrit un procédé de vente ou d'achat mis en œuvre par deux appareils.

Un téléphone mobile comporte fréquemment, en outre, un module de communication téléphonique et au moins un module permettant la communication à courte distance avec d'autres appareils électroniques. De tels modules de communication à courte distance sont, par exemple, utilisés pour transférer des données d'un téléphone à un autre dans le cadre de jeux électroniques, ou pour permettre l'utilisation d'oreillettes sans fil.

Les modules de communication sans fil à courte distance sont, en général, basés sur l'utilisation d'ondes électromagnétiques radiofréquences. Les ondes électromagnétiques radiofréquences, également dénommées ondes radioélectriques, sont les ondes électromagnétiques dont la fréquence est comprise entre 3 KiloHertz (KHz) et 3 GigaHertz (GHz).

La distance sur laquelle une onde électromagnétique radiofréquence se propage dépend de la fréquence de l'onde. Par exemple, la bande de fréquence allant de 2400 à 2483 MégaHertz (MHz) est utilisée par des modules de communication basés sur le protocole Bluetooth, dont la portée est, en général, de quelques dizaines de mètres.

Des modules de communication à courte distance du type précité sont parfois intégrés à des installations fixes telles que des étagères de présentations de produits, et permettent, par exemple, à un utilisateur de recevoir, sur son téléphone, des informations sur un produit proposé à la vente. Des bornes de vente munies de modules de communication à courte distance permettent, en outre, d'acheter un produit grâce à un téléphone mobile.

Cependant, les transactions proposées ne sont pas sécurisées, car il est possible de contrefaire ou de dupliquer la preuve d'achat reçue par le téléphone mobile.

Il existe donc un besoin pour un procédé de réalisation d'une transaction, notamment un procédé permettant l'achat d'un produit, à l'aide d'un téléphone mobile, auprès d'un appareil de vente, qui soit plus sécurisé.

A cet effet, il est proposé un procédé selon la revendication 1.

Suivant un mode de réalisation particulier, le procédé est selon l'une quelconque des revendications 2 à 5.

Il est également proposé un produit programme d'ordinateur selon la revendication 6, le produit programme d'ordinateur comportant des instructions logicielles qui, lorsqu'elles sont exécutées par un contrôleur, mettent en œuvre un procédé tel que décrit ci-dessus.

Les caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'une installation de vente, d'un téléphone mobile et d'un appareil de contrôle,
- la figure 2 est un organigramme d'un exemple de mise en œuvre d'un procédé de réalisation d'une transaction, et
- la figure 3 est un organigramme d'un exemple de mise en œuvre d'un procédé de contrôle.

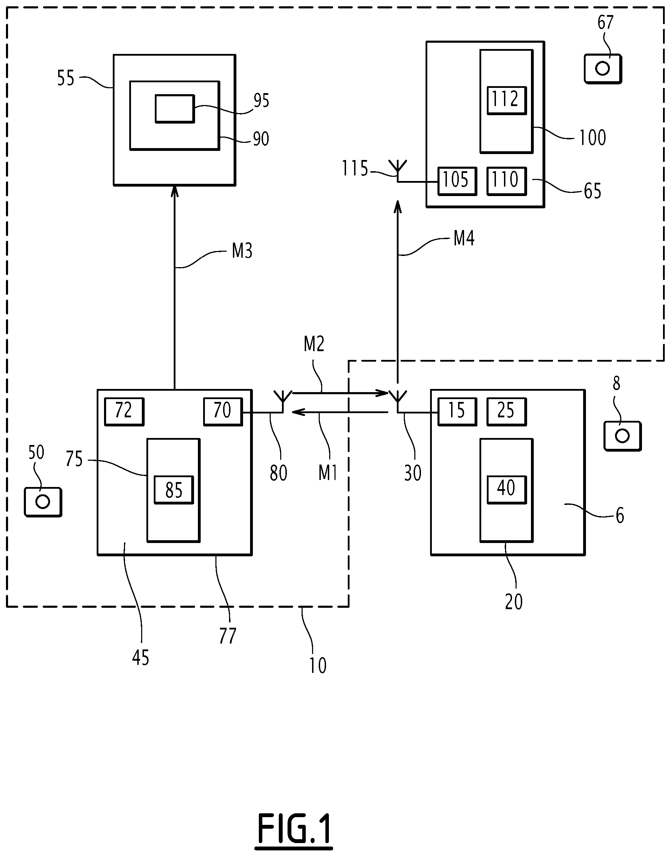

Un téléphone 6, un premier produit programme d'ordinateur 8 et une installation 10 sont représentés sur la figure 1.

Le téléphone 6 est propre à permettre à un utilisateur U du téléphone 6 d'acheter un produit P à l'installation 10.

Le produit P est, par exemple, un droit d'usage d'un moyen de transport.

Selon un autre exemple, le produit P est un objet tel qu'un meuble que l'utilisateur U est invité à retirer dans un magasin ou un dépôt.

Le téléphone 6 est un téléphone mobile. Cela signifie que le téléphone 6 est propre à être transporté par l'utilisateur U et à échanger des données de téléphonie Dt avec un autre téléphone 6 à travers un réseau R de téléphonie sans fil.

De préférence, le téléphone 6 est propre à échanger les données de téléphonie Dt à travers le réseau R par communication radiofréquence.

Il est entendu par le terme « communication radiofréquence » l'échange de données via un signal comportant au moins une onde électromagnétique radiofréquence OEM.

Les données de téléphonie Dt sont propres à permettre la reproduction, par un téléphone, de la parole humaine.

Le téléphone 6 comprend un module d'émission/réception 15, un premier contrôleur 20 et une interface homme/machine 25.

Le module d'émission/réception 15 est un module de communication radiofréquence. Cela signifie que le module d'émission/réception 15 est propre à émettre ou à recevoir des données transmises via un signal comportant au moins une onde électromagnétique radiofréquence OEM.

De préférence, le module d'émission/réception 15 est propre à émettre et à recevoir des données transmises via un signal comportant au moins une onde électromagnétique radiofréquence OEM.

Les ondes électromagnétiques radiofréquences OEM sont les ondes électromagnétiques présentant une fréquence comprise entre 3 KiloHertz (KHz) et 3 GigaHertz (GHz).

Le module d'émission/réception 15 comprend une première antenne 30.

Le module d'émission/réception 15 est, par exemple, propre à émettre ou à recevoir une onde électromagnétique OEM présentant une fréquence supérieure ou égale à 2400 MégaHertz (MHz) et inférieure ou égale à 2483,5 MHz.

De préférence, le module d'émission/réception 15 est propre à émettre et à recevoir une onde électromagnétique OEM présentant une fréquence supérieure ou égale à 2400 MégaHertz (MHz) et inférieure ou égale à 2483,5 MHz.

Avantageusement, le module d'émission/réception 15 utilise un protocole de communication Bluetooth. Bluetooth est un standard de communication permettant l'échange bidirectionnel de données à très courte distance. Les normes définissant les protocoles Bluetooth sont définies par le « Bluetooth Special Interest Group ».

En variante, le module d'émission/réception 15 est propre à émettre ou à recevoir une onde électromagnétique présentant une fréquence supérieure ou égale à 13,553 MHz, et inférieure ou égale à 13,567 MHz.

De préférence, le module d'émission/réception 15 est propre à émettre et à recevoir une onde électromagnétique présentant une fréquence supérieure ou égale à 13,553 MHz, et inférieure ou égale à 13,567 MHz.

Avantageusement, le module d'émission/réception 15 utilise un protocole de communication en champ proche (de l'Anglais « Near-Field Communication », NFC). La communication en champ proche est une technologie de communication sans-fil à courte portée et haute fréquence, permettant l'échange d'informations entre des périphériques jusqu'à une distance d'environ 10 centimètres (cm). La technologie NFC est une extension de la norme ISO/CEI 14443.

Le premier contrôleur 20 est propre à manipuler et/ou transformer des données représentées comme des quantités électroniques ou physiques dans des registres du premier contrôleur 20 et/ou dans des mémoires en d'autres données similaires correspondant à des données physiques dans des mémoires, des registres ou d'autres types de dispositifs d'affichage, de transmission ou de mémorisation.

Le premier contrôleur 20 est, en outre, propre à échanger des données avec le premier module de communication 15 et l'interface homme/machine 25.

Le premier contrôleur 20 est également configuré pour transmettre des données à un serveur (non représenté) via le réseau de téléphonie sans fil R.

Le premier contrôleur 20 comporte une première mémoire 40.

La première mémoire 40 est propre à mémoriser un identifiant I du téléphone 6.

L'identifiant I est propre à identifier le téléphone 6. Cela signifie que l'identifiant I est associé à un unique téléphone 6.

Par exemple, l'identifiant I comprend un numéro de série du téléphone 6.

Avantageusement, l'identifiant I comprend un numéro IMEI (de l'anglais « International Mobile Equipment Identity ») du téléphone 6. Le numéro IMEI est un numéro unique attribué à un unique téléphone 6, et utilisé par les opérateurs de téléphonie pour identifier et pour autoriser ou non le téléphone 6 à se connecter.

Le numéro IMEI est associé directement au téléphone 6 et non à l'utilisateur U. Le numéro IMEI est en particulier utilisé pour bloquer un téléphone volé auprès de l'ensemble des opérateurs ayant souscrit à la base de données IMEI.

De préférence, l'identifiant I est un identifiant fourni au téléphone 6 par un opérateur de l'installation 10 suite au paiement d'une somme prédéfinie, nommé montant à payer Mp, par l'utilisateur U.

Le premier produit programme d'ordinateur 8 comprend des instructions de programme.

Le premier programme d'ordinateur 8 est chargeable sur le premier contrôleur 20 et est adapté pour entraîner la mise en œuvre d'un procédé d'achat du produit P lorsque le premier programme d'ordinateur 8 est exécuté sur le premier contrôleur 20.

L'installation 10 est une installation de vente. L'installation 10 est propre à assurer la vente du produit P à l'utilisateur U et à vérifier l'achat du produit P par l'utilisateur U.

L'installation 10 comprend un appareil 45 de vente, un deuxième produit programme d'ordinateur 50, un dispositif de centralisation 55, un troisième produit programme d'ordinateur, un appareil de contrôle 65 et un quatrième produit programme d'ordinateur 67.

L'appareil de vente 45 est configuré pour vendre le produit P à l'utilisateur U du téléphone 6.

L'appareil de vente 45 est fixe. Cela signifie que l'appareil de vente 45 n'est pas déplaçable par l'utilisateur U.

Par exemple, l'appareil de vente 45 est fixé à l'intérieur d'un véhicule de transport en commun tel qu'un bus ou un tramway. Par exemple, l'appareil de vente est fixé au plancher du véhicule.

En variante, l'appareil de vente 45 est fixé à un mur. Par exemple, l'appareil de vente 45 est scellé dans le mur.

L'appareil de vente 45 est un automate.

Par le terme « automate », il est entendu un dispositif électromécanique multiservices tel qu'un dispositif électromécanique multiservices de billettique de transport en commun de personnes. Par exemple, l'appareil de vente 45 est propre à composter un ticket de transport.

Selon l'invention, l'appareil de vente 45 est un appareil de gestion du stationnement.

Cela signifie que l'appareil de vente 45 est, en outre, configuré pour vendre à l'utilisateur U un ticket de stationnement. Par exemple, le ticket de stationnement est un ticket imprimé. En variante, le ticket de stationnement est un fichier informatique propre à être mémorisé dans la mémoire 40 du téléphone 6.

Un horodateur est un exemple particulier d'automate.

L'appareil de vente 45 comprend un premier module de transmission 70, une deuxième interface homme/machine 72, un deuxième contrôleur 75 et un corps 77.

Le premier module de transmission 70 comprend une antenne 80.

Le premier module de transmission 70 est propre à échanger des informations avec le module d'émission/réception 15. De préférence, le premier module de transmission 70 est un module de communication radiofréquence.

La deuxième interface homme/machine 72 est configurée pour permettre à un utilisateur U de l'appareil de vente 45 d'échanger des informations avec le deuxième contrôleur 75.

La deuxième interface homme/machine 72 comporte, par exemple, un écran tactile.

Le deuxième contrôleur 75 est propre à échanger des informations avec le dispositif de centralisation 55.

Par exemple, le deuxième contrôleur 75 est connecté au dispositif de centralisation 55 par une liaison filaire telle qu'une liaison Ethernet. Ethernet est une famille de protocoles de réseaux définie par la norme IEEE 802.3.

En variante, le deuxième contrôleur 75 est connecté au dispositif de centralisation 55 par une liaison sans fil telle qu'une liaison radiofréquence.

Le deuxième contrôleur 75 comporte une deuxième mémoire 85.

La deuxième mémoire 85 comprend une première liste L1 d'identifiants I.

Avantageusement, chaque identifiant I de la première liste L1 est associé à un utilisateur U s'étant inscrit auprès de l'opérateur de l'installation 10.

Le deuxième produit programme d'ordinateur 50 comprend des instructions de programme.

Le deuxième programme d'ordinateur 50 est chargeable sur le deuxième contrôleur 75 et est adapté pour entraîner la mise en œuvre d'un procédé de réalisation d'une transaction lorsque le deuxième programme d'ordinateur 50 est mis en œuvre sur le deuxième processeur 82.

Le deuxième contrôleur 75 et le premier module de transmission 70 sont disposés à l'intérieur du corps 77. Le corps 77 est alors propre à isoler le deuxième contrôleur 75 et le premier module de transmission 70 de l'extérieur de l'appareil de vente 45.

Le dispositif de centralisation 55 est propre à échanger des données avec l'appareil de vente 45.

Le dispositif de centralisation 55 est un dispositif électronique. Cela signifie que le dispositif de centralisation 55 comporte au moins un module propre à recevoir, modifier ou transmettre des informations sous la forme de signaux électriques. Par exemple, le dispositif de centralisation 55 est un serveur informatique.

Le dispositif de centralisation 55 est distant de l'appareil de vente 45. Cela signifie que le dispositif de centralisation 55 n'est pas compris dans le corps 77 de l'appareil de vente 45.

Le dispositif de centralisation 55 comprend un troisième contrôleur 90.

Le troisième contrôleur 90 est propre à échanger des informations avec le deuxième contrôleur 75. De préférence, le troisième contrôleur 90 est configuré pour échanger des informations avec chaque deuxième contrôleur 75 d'une pluralité d'appareils de vente 45.

Le troisième contrôleur 90 comprend une troisième mémoire 95.

La troisième mémoire 95 comporte un premier tableau T1 comprenant au moins un identifiant I et des informations IU sur l'utilisateur U.

De préférence, le premier tableau T1 comprend une pluralité d'identifiants I.

Chaque identifiant I du premier tableau T1 est associé à un unique utilisateur U. L'identifiant I du téléphone 6 est associé à l'utilisateur U.

Les informations sur l'utilisateur IU comprennent, par exemple, le nom de l'utilisateur U, une adresse de facturation et/ou un numéro de compte bancaire.

Le troisième contrôleur 90 est, par exemple, propre à enregistrer le paiement d'une somme prédéfinie par l'utilisateur U et à fournir en réponse l'identifiant I au téléphone mobile 6. Par exemple, le troisième contrôleur 90 est propre à transmettre, par communication radiofréquence, un certificat de paiement comprenant au moins l'identifiant I au téléphone mobile 6. Le troisième produit programme d'ordinateur comprend des instructions de programme.

Le troisième programme d'ordinateur est chargeable sur le troisième contrôleur 90 et est adapté pour entraîner la mise en œuvre d'un procédé de réalisation d'une transaction lorsque le deuxième programme d'ordinateur est mis en œuvre sur le troisième contrôleur 90.

L'appareil de contrôle 65 est configuré pour contrôler l'achat par l'utilisateur U du téléphone portable 6 du produit P, et pour communiquer à un utilisateur U les résultats du contrôle.

L'appareil de contrôle 65 est, de préférence, un appareil électronique mobile. L'appareil de contrôle 65 est, par exemple, un téléphone mobile. En variante, l'appareil de contrôle 65 est un appareil électronique dédié.

L'appareil de contrôle 65 comporte un quatrième contrôleur 100, un deuxième module de transmission 105 et une troisième interface homme/machine 110.

Le quatrième contrôleur 100 est propre à échanger des informations avec le deuxième module de transmission 105 et la troisième interface homme/machine 110.

Le quatrième contrôleur 100 comporte une quatrième mémoire 112.

Le deuxième module de transmission 105 comprend une antenne 115.

Le deuxième module de transmission 105 est propre à échanger des informations avec le module d'émission/réception 15. De préférence, le deuxième module de transmission 105 est un module de communication radiofréquence.

La troisième interface homme/machine 110 est configurée pour permettre à un utilisateur U de l'appareil de contrôle 65 d'échanger des informations avec le quatrième contrôleur 100.

La troisième interface homme/machine 110 comporte, par exemple, un écran tactile, et un haut-parleur.

Le quatrième produit programme d'ordinateur 67 comprend des instructions de programme.

Le quatrième programme d'ordinateur 67 est chargeable sur le quatrième contrôleur 100 et est adapté pour entraîner la mise en œuvre d'un procédé de contrôle de l'achat d'un produit P par l'utilisateur U lorsque le quatrième programme d'ordinateur 67 est mis en œuvre sur le quatrième contrôleur 100.

Le fonctionnement de l'installation 8 va maintenant être décrit.

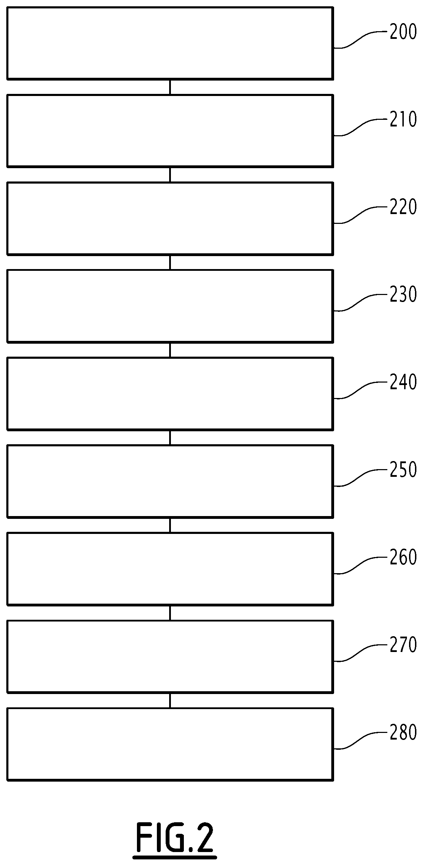

La figure 2 présente les étapes d'un procédé de réalisation d'une transaction entre l'appareil de vente 45 et le téléphone 6.

Le terme « transaction » désigne la vente du produit P, c'est-à-dire la fourniture du produit P à l'utilisateur U en échange du paiement d'un montant à payer Mp.

Le procédé de réalisation d'une transaction comprend une étape 200 de transmission d'un identifiant I, une étape 210 d'identification, une étape 220 de calcul, une étape 230 de génération d'une preuve d'achat PA, une étape 240 de transmission d'une preuve d'achat PA, une étape 250 de mémorisation, une étape 260 de génération d'un témoin T, une étape 270 de communication du témoin T, et une étape 280 de génération d'une facture F.

Les étapes 210 d'identification, 220 de calcul, 230 de génération de la preuve d'achat PA, 260 de génération du témoin T et 270 de transmission du témoin T sont mises en œuvre par l'appareil de vente 45.

L'étape 200 de transmission de l'identifiant I et l'étape 240 de transmission de la preuve d'achat PA sont mises en œuvre conjointement par l'appareil de vente 45 et le téléphone 6.

L'étape 250 de mémorisation est mise en œuvre par le téléphone 6.

Lorsque l'étape 200 de transmission de l'identifiant I, l'étape 240 de transmission de la preuve d'achat PA et l'étape 250 de mémorisation sont mises en œuvre par le téléphone 6, l'étape 200 de transmission de l'identifiant I, l'étape 240 de transmission de la preuve d'achat PA et l'étape 250 de mémorisation forment un procédé d'achat, par le téléphone 6, du produit P à l'appareil de vente 45.

La preuve d'achat PA est propre à démontrer, lors d'une opération de contrôle, l'achat du produit P par l'utilisateur U du téléphone 6.

La preuve d'achat PA est un fichier informatique, c'est-à-dire un ensemble d'informations propre à être mémorisé par une mémoire 40.

La preuve d'achat PA comporte des données D de description du produit P acheté et une signature S.

Les données de description D sont propres à identifier le produit P acheté par l'utilisateur U du téléphone 6.

Par exemple, les données de description D sont associées à un unique produit P. En variante, les données de description D sont associées à un ensemble de produits P indiscernables les uns des autres.

Les données de description D comprennent, par exemple, un ensemble de caractéristiques du produit P.

Lorsque le produit P est un meuble, les données de description D comprennent le nom, la dimension et la couleur du produit P.

Lorsque le produit P est un droit d'usage d'un réseau de transport, la preuve d'achat PA est un titre de transport.

Cela signifie que, lors d'une opération de contrôle, il est considéré que l'utilisateur U est autorisé à emprunter le réseau de transport si l'utilisateur U possède la preuve d'achat PA. Si l'utilisateur U ne possède pas la preuve d'achat PA, il est considéré que l'utilisateur U n'est pas autorisé à emprunter le réseau de transport.

Un titre de transport, pour avoir une valeur contractuelle, doit avoir fait l'objet d'un paiement et avoir été validé (ou composté) par un appareil qui finalise alors la vente du titre de transport. La validation est, par exemple, effectuée par l'insertion de la signature S dans la preuve d'achat PA.

Les données de description D comprennent, par exemple, une heure de début de validité du titre de transport, une heure de fin de validité du titre de transport, le nom d'une gare de départ et/ou le nom d'une gare d'arrivée.

Optionnellement, les données de description D comprennent un identifiant du produit P tel qu'un numéro de série.

Selon un autre exemple, la mémoire 112 de l'appareil de contrôle 65 comporte un tableau de hachage Tab comprenant des caractéristiques d'une pluralité de produits P, et les données de description D sont propres à indiquer la position des caractéristiques du produit P dans le tableau de hachage Tab.

Par exemple, les données de description D sont propres à permettre à l'appareil de contrôle 65 de calculer, selon une fonction de hachage H, un indice i repérant la position des caractéristiques du produit P dans le tableau de hachage Tab.

La signature S est un ensemble de données propre à authentifier la preuve d'achat PA. Cela signifie que la signature S est propre à permettre à l'appareil de contrôle 65 de vérifier que la preuve d'achat PA a été générée par l'appareil de vente 45.

Par exemple, la signature S est un nombre décimal généré aléatoirement chaque jour et mémorisé dans la deuxième mémoire 85.

De préférence, la signature S est, en outre, propre à identifier le téléphone 6. Cela signifie que la signature S est associée à un unique téléphone 6.

Par exemple, lorsque l'identifiant I est un nombre, la signature S comprend un nombre calculé à partir de l'identifiant I selon une première fonction mathématique F1.

La première fonction F1 présente, de préférence, une fonction réciproque F2 associant l'identifiant I à la signature S.

En variante, la signature S est le résultat du chiffrement au moins de l'identifiant I suivant un algorithme de chiffrement A.

L'algorithme de chiffrement A présente une clé de chiffrement K.

L'algorithme de chiffrement est, par exemple, le « standard de chiffrement avancé » (également connu sous le nom de « Rijndael », ou « AES », de l'Anglais « Advanced encryption standard »). L'algorithme AES est défini dans la norme ISO/IEC 18033-3.

Selon une autre variante, une deuxième liste L2 d'identifiants est mémorisée dans la mémoire 112 l'appareil de contrôle et la signature S comporte une information repérant la position de l'identifiant I du téléphone 6 dans la deuxième liste L2.

Par exemple, la signature S est propre à permettre à l'appareil de contrôle 65 de calculer, selon la fonction de hachage H, un indice j repérant la position de l'identifiant I du téléphone 6 dans la deuxième liste L2.

Au cours de l'étape 200 de transmission de l'identifiant I, un premier message M1 est généré par le téléphone 6 et émis par le module d'émission/réception 15 à destination du premier module de transmission 70.

Le premier message M1 est transmis au premier module de transmission 70 par communication radiofréquence.

Le premier message M1 comprend l'identifiant I du téléphone 6. Dans un cas où un certificat de paiement a été transmis au téléphone 6, le premier message M1 comporte par exemple le certificat de paiement.

A l'issue de l'étape 200 de transmission de l'identifiant I, l'appareil de vente 45 a reçu l'identifiant I.

A l'étape 210 d'identification, le téléphone 6 est identifié. Cela signifie qu'à l'issue de l'étape 210 d'identification, l'appareil de vente 45 a déterminé si l'utilisateur U du téléphone 6 est inscrit ou non auprès de l'opérateur de l'installation 10.

L'identifiant I reçu par l'appareil de vente 45 est comparé à chacun des identifiants I de la première liste L1.

Si l'identifiant I reçu n'est pas compris dans la première liste L1, un message d'erreur ME est affiché sur l'écran de la deuxième interface homme/machine 72 et le procédé de réalisation d'une transaction est interrompu.

Si l'identifiant I reçu est compris dans la première liste L1, l'étape 210 d'identification est suivie de l'étape 220 de calcul.

Au cours de l'étape 220 de calcul, la signature S est calculée.

A l'étape 230 de génération, la preuve d'achat PA est générée.

Par exemple, le certificat de paiement comprend tout ou partie des données de description D, et la preuve d'achat PA est générée à partir du certificat. En particulier, la génération de la preuve d'achat PA comprend l'insertion de la signature S dans le certificat de paiement pour former la preuve d'achat PA.

A l'étape 240 de transmission, le premier module de transmission 70 émet un deuxième message M2 à destination du module d'émission/réception 15.

Le deuxième message M2 comporte la preuve d'achat PA.

Le deuxième message M2 est transmis au module d'émission/réception 15 par communication radiofréquence.

La preuve d'achat PA est mémorisée dans la première mémoire 40 au cours de l'étape 250 de mémorisation.

Les étapes 200 de transmission d'un identifiant I, 210 d'identification, 220 de calcul, 230 de génération d'une preuve d'achat PA, 240 de transmission d'une preuve d'achat PA et 250 de mémorisation permettent donc de finaliser la vente d'un droit d'usage d'un réseau de transport, puisque le certificat de paiement est validé par l'appareil de vente 45 par insertion de la signature S pour former alors un titre de transport en règle.

A l'étape 260 de génération, un témoin T de la vente est généré.

Le témoin T est un ensemble de données comprenant des informations relatives à la vente, par l'appareil de vente 45, du produit P à l'utilisateur U. Le témoin T est propre à permettre au dispositif de centralisation 55 de générer une facture F.

Le témoin T comprend, par exemple, un montant à payer Mp et l'identifiant I. En variante, le témoin T comprend, en outre, les données de description D et/ou la signature S.

Comme suite à l'étape 260 de génération du témoin T, un troisième message M3 est émis par le deuxième contrôleur 75 à destination du troisième contrôleur 90, au cours de l'étape 270 de transmission.

Le troisième message M3 comporte le témoin T.

Le témoin T est mémorisé dans une troisième liste L3 de témoins. La troisième liste L3 est mémorisée dans la troisième mémoire 95.

A l'issue de l'étape de communication 270, le témoin T a donc été communiqué par l'appareil de vente 45 au dispositif de centralisation 55.

Enfin, à l'étape de facturation 280, le dispositif de centralisation 55 génère une facture F à partir du témoin T. De préférence, le dispositif de centralisation 55 génère la facture F à partir de tous les témoins T comprenant le même identifiant I.

La facture F est un ensemble de données transmises à l'utilisateur U et propres à commander le paiement, par l'utilisateur U, du montant à payer Mp, si ce paiement n'a pas déjà eu lieu.

Par exemple, la facture F comprend le montant à payer Mp et les données de description D.

La facture F est générée avec une fréquence fixe, par exemple mensuelle. Cela signifie qu'une seule facture F est générée chaque mois, et que la facture F comporte les montants à payer Mp de chacun des achats réalisés par l'utilisateur U depuis l'émission de la facture F précédente.

En variante, la facture F est générée lors de chaque mise en œuvre du procédé de réalisation d'une transaction.

La facture F est transmise à l'utilisateur U à travers le réseau Internet.

A l'issue des étapes 200 à 280 ci-dessus, le téléphone 10 a reçu de l'appareil de vente 45 une preuve d'achat PA, et le dispositif de centralisation 20 a généré en retour une facture F. Les étapes 200 à 280 ci-dessus forment donc un procédé de réalisation d'une transaction.

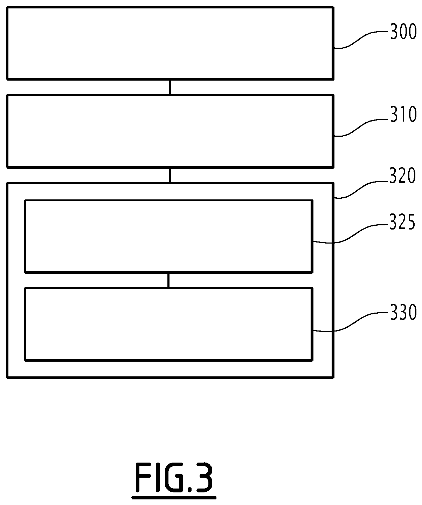

La figure 3 présente les étapes d'un exemple de procédé de contrôle de la preuve d'achat PA.

Le procédé de contrôle comprend une étape 300 de réalisation d'une transaction, une étape 310 de transfert et une étape 320 d'authentification de la preuve d'achat PA.

A l'étape 300 de réalisation d'une transaction, le procédé de réalisation d'une transaction tel que décrit ci-dessus est mis en œuvre.

A l'issue de l'étape 300 de réalisation d'une transaction, la preuve d'achat PA a été générée par l'appareil de vente 45 et mémorisée dans la mémoire 40 du téléphone 6.

A l'étape 310 de transfert, le module d'émission/réception 15 émet un quatrième message M4 à destination du deuxième module de transmission 105.

Le quatrième message M4 comprend la preuve d'achat PA et l'identifiant I.

A l'issue de l'étape 310 de transfert, la preuve d'achat PA et l'identifiant I ont été transmis depuis le téléphone 6 à l'appareil de contrôle 65.

A l'étape 320 d'authentification, la signature S est authentifiée par l'appareil de contrôle 65.

Cela signifie que le quatrième contrôleur 100 vérifie que la signature S présente une caractéristique attendue par le quatrième contrôleur 100 et génère un signal d'authenticité Sa en fonction de la présence ou non de la caractéristique attendue.

Par exemple, lorsque la signature S est un nombre associé à un jour particulier, la signature S est comparée à une signature de référence Sr mémorisée dans la quatrième mémoire 112. La signature de référence Sr est égale à la signature S mémorisée dans la deuxième mémoire 85.

En variante, le quatrième contrôleur 100 effectue au moins une opération à partir de la signature S, et compare le résultat de l'opération à un résultat attendu.

Par exemple, la signature S est un nombre et la caractéristique attendue est la valeur de la somme des chiffres de la signature S. Le quatrième contrôleur 100 calcule la somme des chiffres de la signature S et la compare à une valeur de référence Vr mémorisée dans la quatrième mémoire 112.

De préférence, l'étape 320 d'authentification comprend une sous-étape 325 de calcul d'un identifiant Ic et une sous-étape 330 de comparaison.

A la sous-étape 325 de calcul, un identifiant Ic est calculé à partir de la signature S.

Lorsque la signature S est un nombre calculé selon la première fonction F1 à partir de l'identifiant I du téléphone 6, l'identifiant calculé Ic est calculé à partir de la deuxième fonction F2.

Lorsque la signature S est le résultat du chiffrement de l'identifiant I, la clé de chiffrement K est mémorisée dans la mémoire 112 de l'appareil de contrôle 65, et l'identifiant Ic est calculé selon l'algorithme de chiffrement A.

Selon une deuxième variante, l'appareil de contrôle 65 calcule un indice i selon la fonction de hachage H, et l'identifiant calculé Ic est fixé égal à l'identifiant I repéré dans la deuxième liste L2 par l'indice i calculé.

Ensuite, au cours d'une étape 330 de comparaison, l'identifiant Ic calculé à partir de la signature S est comparé à l'identifiant I compris dans le quatrième message M4.

Les données de définition D sont, en outre, comparées à des données de référence Dr mémorisées dans la quatrième mémoire 112.

Dans le cas où la preuve d'achat PA est un titre de transport, les données de référence Dr sont, par exemple, identiques aux données de définition D correspondant à un voyage en cours d'un train sur lequel l'appareil de contrôle 25 est embarqué.

Si l'identifiant calculé Ic est identique à l'identifiant I reçu, et les données de définition D sont identiques aux données de référence Dr, un signal de conformité Sc est émis par la troisième interface homme/machine 110.

Le signal de conformité Sc est propre à assurer un utilisateur de l'appareil de contrôle 65 de l'authenticité de la preuve d'achat PA. Le signal de conformité Sc comprend, par exemple, un signal sonore.

Dans le cas contraire, un signal de non-conformité Sn est émis par la troisième interface homme/machine 110. Le signal de non-conformité Sn prend par exemple la forme d'un signal sonore différent du signal de conformité Sc.

La génération par l'appareil de vente 45 de la signature S permet de vérifier aisément l'authenticité de la preuve d'achat PA. La contrefaçon de la preuve d'achat PA suppose, alors, la connaissance de la méthode de calcul de la signature S.

En particulier, comme la signature S est générée à partir de l'identifiant I, l'appareil de contrôle 65 peut comparer l'identifiant I du téléphone 6 et l'identifiant Ic calculé à partir de la preuve d'achat PA.

La duplication de la preuve d'achat PA et son transfert vers un autre téléphone 6 sont donc détectables aisément par l'appareil de contrôle 65. Le procédé de réalisation d'une transaction est donc sécurisé.

De plus, le procédé de réalisation d'une transaction n'implique pas le transfert de données par le réseau téléphonique sans fil. Le procédé peut donc être mis en œuvre par un téléphone 6 qui n'est pas relié au réseau de téléphonie mobile R. En particulier, le procédé de réalisation d'une transaction peut être mis en œuvre même en cas de défaillance ou de saturation du réseau de téléphonie sans fil R.

Le procédé de réalisation d'une transaction est donc fiable.

Un deuxième exemple d'installation 10 va maintenant être décrit. Les éléments identiques au premier exemple de la figure 1 ne sont pas décrits à nouveau. Seules les différences sont mises en évidence.

Le deuxième message M2 comporte le témoin T.

Le troisième contrôleur 90 est, en outre, propre à recevoir le troisième message M3 via le réseau de téléphonie sans fil R.

Le troisième message M3 est généré par le premier contrôleur 20.

Lors de l'étape 270 de communication, le téléphone 6 transmet le troisième message M3 au dispositif de centralisation 55 via le réseau de téléphonie sans fil R.

En particulier, le troisième message M3 est transmis via le réseau de téléphonie sans fil R si la liaison filaire entre l'appareil de vente 45 et le dispositif de centralisation 55 est endommagée.

Le procédé de réalisation d'une transaction est alors plus robuste.

## Revendications

1. Procédé de contrôle de l'achat d'un produit (P) par un téléphone mobile (6), le procédé de contrôle comprenant une étape de :
i) mise en œuvre d'un procédé de réalisation d'une transaction entre un téléphone mobile (6) et un appareil de gestion du stationnement, l'appareil de gestion du stationnement étant configuré pour vendre le produit, le produit étant un ticket de stationnement, le téléphone (6) comprenant une première mémoire (40) de mémorisation d'un identifiant (I), l'identifiant (I) étant propre à identifier le téléphone mobile (6) de manière unique, le procédé de réalisation d'une transaction comprenant les étapes de:
a) réception, par communication radiofréquence, de l'identifiant (I) par l'appareil de gestion du stationnement,
b) identification, par l'appareil de gestion du stationnement, du téléphone mobile (6) à partir de l'identifiant (I) reçu lors de l'étape de réception,
c) génération, par l'appareil de gestion du stationnement, d'une preuve d'achat (PA) comprenant une signature (S) calculée par l'appareil de gestion du stationnement et propre à authentifier la preuve d'achat (PA), et
d) transmission de la preuve d'achat (PA) depuis l'appareil de gestion du stationnement au téléphone mobile (6) par communication radiofréquence,
le procédé de contrôle comprenant des étapes de :
ii) transfert de la preuve d'achat (PA) depuis le téléphone mobile (6) à un appareil de contrôle (65) par communication radiofréquence et
iii) authentification, par l'appareil de contrôle (65), de la signature (S) de la preuve d'achat (PA).

2. Procédé de contrôle selon la revendication 1, dans lequel la signature (S) est calculée par l'appareil de gestion du stationnement à partir au moins de l'identifiant (I) reçu.

3. Procédé de contrôle selon la revendication 1 ou 2, dans lequel les communications radiofréquence présentent au moins une fréquence supérieure ou égale à 2400 MégaHertz (MHz) et inférieure ou égale à 2483,5 MHz.

4. Procédé de contrôle selon l'une quelconque des revendications 1 à 3, dans lequel le procédé de réalisation d'une transaction comporte en outre des étapes de :
e) génération, par l'appareil de gestion du stationnement, d'un témoin (T) de la vente,
f) communication, par l'appareil de gestion du stationnement, du témoin (T) à un dispositif électronique distant (55), et
h) génération, par le dispositif distant (55), d'une facture (F) à partir au moins du témoin (T) reçu.

5. Procédé de contrôle selon la revendication 1 prise avec la revendication 2, le procédé comprenant en outre des étapes de :
iv) transfert de l'identifiant (I) depuis le téléphone mobile (6) à l'appareil de contrôle (65), et
v) calcul, par l'appareil de contrôle (65), d'un identifiant (Ic) calculé à partir de la signature (S),
l'étape iii) d'authentification comprenant la comparaison de l'identifiant calculé (Ic) et de l'identifiant (I) reçu.

6. Produit programme d'ordinateur (8, 50, 67) comprenant des instructions de programme qui, lorsqu'elles sont exécutées par un contrôleur (20, 75, 90, 100), mettent en œuvre un procédé selon l'une quelconque des revendications 1 à 5.

## Patentansprüche

1. Steuerungsverfahren des Kaufs eines Produkts (P) durch ein Mobiltelefon (6), das Steuerungsverfahren umfassend einen folgenden Schritt:
i) Implementieren eines Verfahrens zum Durchführen einer Transaktion zwischen einem Mobiltelefon (6) und einer Parkraumverwaltungsvorrichtung, wobei die Parkraumverwaltungsvorrichtung konfiguriert ist, um das Produkt zu verkaufen, wobei das Produkt 2 ein Parkticket ist, das
Telefon (6) umfassend einen ersten Speicher (40) zum Speichern einer Kennung (I) umfasst, wobei die Kennung (I) geeignet ist, um das Mobiltelefon (6) eindeutig zu identifizieren, das Verfahren zum Durchführen einer Transaktion umfassend die folgenden Schritte:
a) Empfangen, durch Funkfrequenzkommunikation, der Kennung (I) durch die Parkraumverwaltungsvorrichtung,
b) Identifizieren des Mobiltelefons (6) durch die Parkraumverwaltungsvorrichtung anhand der in dem Empfangsschritt empfangenen Kennung (I),
c) Erzeugen, durch die Parkraumverwaltungsvorrichtung, eines Kaufnachweises (PA), umfassend eine Signatur (S), die von der Parkraumverwaltungsvorrichtung berechnet wird und geeignet ist, um den Kaufnachweis (PA) zu authentifizieren
d) Übertragen des Kaufnachweises (PA) von der Parkraumverwaltungsvorrichtung auf das Mobiltelefon (6) durch Funkfrequenzkommunikation,
das Steuerungsverfahren umfassend die folgenden Schritte:
ii) Übertragen des Kaufnachweises (PA) von dem Mobiltelefon (6) zu einer Steuerungsvorrichtung (65) durch Funkfrequenzkommunikation, und
iii) Authentifizieren, durch die Steuerungsvorrichtung (65), der Unterschrift (S) des Kaufnachweises (PA).

2. Steuerungsverfahren nach Anspruch 1, wobei die Signatur (S) von der Parkraumverwaltungsvorrichtung zumindest anhand der empfangenen Kennung (I) berechnet wird.

3. Steuerungsverfahren nach Anspruch 1 oder 2, wobei die Funkfrequenzkommunikation mindestens eine Frequenz aufweist, die größer als oder gleich wie 2400 Megahertz (MHz) und kleiner als oder gleich wie 2483,5 MHz ist.

4. Steuerungsverfahren nach einem der Ansprüche 1 bis 3, wobei das Verfahren zum Durchführen einer Transaktion ferner die folgenden Schritte umfasst: :
e) Erzeugen, durch die Parkraumverwaltungsvorrichtung, eines Belegs (T) für den Verkauf,
f) Übermitteln, durch die Parkverwaltungsvorrichtung, des Belegs an ein entferntes elektronisches Gerät (55), und
h) Erzeugen, durch das entfernte Gerät (55), einer Rechnung (F) zumindest anhand des empfangenen Belegs (T).

5. Steuerungsverfahren nach Anspruch 1, zusammengenommen mit Anspruch 2, wobei das Verfahren ferner die folgenden Schritte umfasst:
iv) Übertragen der Kennung (I) von dem Mobiltelefon (6) an die Steuervorrichtung (65), und
v) Berechnen einer Kennung (le) (Ic), die anhand der Signatur (S) berechnet wird, durch die Steuervorrichtung (65),
der Authentifizierungsschritt iii) umfassend den Vergleich der berechneten Kennung (le) (Ic) und der empfangenen Kennung (I).

6. Rechnerprogrammprodukt (8, 50, 67), umfassend Programmanweisungen, die, wenn sie von einer Steuerung (20, 75, 90, 100) ausgeführt werden, ein Verfahren nach einem der Ansprüche 1 bis 5 implementieren.

## Claims

1. A verification method for verifying the purchase of a product (P) by a mobile phone (6), the method comprising a step of:
i) carrying out a method for performing a transaction between a mobile phone (6) and a parking management apparatus, the parking management apparatus being configured to sell the product, the product being a parking ticket, the phone (6) comprising a first memory (40) for storing an identifier (I), the identifier (I) being unique to the mobile phone (6), the method for performing a transaction comprising the steps of:
a) reception of the identifier (I) by radiofrequency communication via the parking management apparatus,
b) identification of the mobile telephone (6) by the parking management apparatus from the identifier (I) received during the reception step, and
c) generation by the parking management apparatus of a proof of purchase (PA) comprising a signature (S) computed by the parking management apparatus and able to authenticate the proof of purchase (PA), and
d) sending of the proof of purchase (PA) from the parking management apparatus to the mobile phone (6) by radiofrequency communication,
the verification method comprising the steps of:
ii) transfer of the proof of purchase (PA) from the mobile phone (6) to a verification apparatus (65) by radiofrequency communication; and
iii) authentication, by the verification apparatus (65), of the signature (8) of the proof of purchase (PA).

2. The verification method according to claim 1, wherein the signature (S) is computed by the parking management apparatus from at least the received identifier (I).

3. The verification method according to claim 1 or 2, wherein the radiofrequency communications have at least one frequency greater than or equal to 2400 MegaHertz (MHz) and less than or equal to 2483.5 MHz.

4. The verification method according to any one of claims 1 to 3, wherein the method further comprises following steps:
e) generation, by the parking management apparatus, of a cookie (T) for the sale,
f) communication, by the parking management apparatus, of the cookie (T) to a remote electronic device (55), and
h) generation, by the remote device (55), of a bill (F) from at least the received cookie (T).

5. The verification method according to claim 1, taken with claim 2, the method further comprising the steps of:
iv) transfer of the identifier (I) from the mobile telephone (6) to the verification apparatus (65), and
v) computation, by the verification apparatus (65), of an identifier (Ic) computed from the signature (S),
the authentication step iii) comprising a comparison of the computed identifier (Ic) and the received identifier (I).

6. A computer program product (8, 50, 67) comprising software instructions which, when implemented by a controller (20, 75, 90, 100), carry out a method according to any one of claims 1 to 5.
